# EUROPÄISCHE PATENTSCHRIFT

(11) **EP 1 362 538 B1**
(45) Veröffentlichungstag und Bekanntmachung des Hinweises auf die Patenterteilung: **10.09.2008**
(21) Anmeldenummer: 03010157.0
(22) Anmeldetag: 06.05.2003
(51) Int. Cl.: A47J 47/20, A47L 17/02, A47L 19/02, E03C 1/18

(54) **Spüle**
Sink
Evier

(30) Priorität: 13.05.2002 DE 10222046
(43) Veröffentlichungstag der Anmeldung: 19.11.2003
(73) Patentinhaber: BLANCO GmbH + Co KG, 75038 Oberderdingen (DE)
(72) Erfinder: Wassiliadis, Thomas, 75038 Oberderdingen (DE); Ziemann, Brigitte, 75031 Eppingen (DE)
(74) Vertreter: Hoeger, Stellrecht & Partner Patentanwälte

(56) Entgegenhaltungen:
- DE-U- 20 112 173
- DE-U- 20 117 624
- US-A- 3 837 634
- US-A- 3 918 377

## Beschreibung

Die vorliegende Erfindung betrifft eine Spüle, die mindestens ein Becken und mindestens eine Auflagefläche für ein Spülenzubehörteil umfasst.

Eine solche Spüle ist beispielsweise aus dem deutschen Gebrauchsmuster Nr. 201 17 624 oder aus der DE 197 38 964 A1 bekannt.

Die aus den genannten Druckschriften bekannten Spülen umfassen Auflageflächen für ein Schneidbrett, wobei das Schneidbrett längs der Auflageflächen verschiebbar ist. Dabei ist die ebene Oberseite des Schneidbretts in jeder Stellung des Schneidbretts im wesentlichen horizontal ausgerichtet.

Sammeln sich bei der Benutzung des Schneidbretts, beispielsweise beim Schneiden von Fleisch oder Früchten, Flüssigkeiten an der Oberseite des Schneidbretts an, so verbleiben diese Flüssigkeiten entweder auf dem Schneidbrett, oder sie laufen in einer im wesentlichen zufälligen Richtung über einen der Ränder des Schneidbretts ab.

Dies ist insbesondere dann von Nachteil, wenn die Flüssigkeiten in einen Bereich der Spüle ablaufen, welcher von diesen Flüssigkeiten frei bleiben soll, beispielsweise die Abtropffläche der Spüle oder der Spülenrand.

Die US-A-3 918 377 offenbart eine Spüle gemäß dem Oberbegriff von Anspruch 1.

Die US-A-3 837 634 offenbart ein Schneidbrett.

Der vorliegenden Erfindung liegt die Aufgabe zugrunde, eine Spüle der eingangs genannten Art zu schaffen, bei welcher eine verbesserte Funktionalität eines an der Spüle angeordneten Spülenzubehörteils gewährleistet ist.

Diese Aufgabe wird bei einer Spüle mit den Merkmalen von Anspruch 1 erfindungsgemäß gelöst.

Durch diese Neigung eines Teilbereichs der Auflageflächen wird beim Anordnen des Spülenzubehörteils an der Spüle eine entsprechende Neigung der Oberseite des Spülenzubehörteils erzeugt, so dass für Flüssigkeiten, die bei der Benutzung des Spülenzubehörteils an demselben sich ansammeln, ein Gefälle entsteht, welches die Flüssigkeiten in einer Vorzugsrichtung abfließen lässt. Diese Vorzugsrichtung kann durch geeignete Ausgestaltung des geneigten Teilbereichs der Auflageflächen so gewählt werden, dass die Flüssigkeiten in einen gewünschten Bereich der Spüle abfließen und andere Bereiche der Spüle, insbesondere der Spülenrand und Abtropfflächen der Spüle, von solchen Flüssigkeiten frei bleiben.

Der geneigte Teilbereich der Auflageflächen bildet eine Rampe, an welcher sich ein Teil des Spülenzubehörteils oder das gesamte Spülenzubehörteil so abstützt, dass das Spülenzubehörteil eine gegen die Horizontale geneigte Stellung einnimmt.

Insbesondere kann vorgesehen sein, dass der geneigte Teilbereich ein Endbereich der Auflageflächen ist und das der Teilbereich derart gegen die Horizontale geneigt ist, dass der Teilbereich zum Ende der Auflageflächen hin ansteigt. Hierdurch ist gewährleistet, dass das Gefälle der Oberseite des Spülenzubehörteils vom Ende der Auflageflächen weg weist und sich auf dem Spülenzubehörteil ansammelnde Flüssigkeiten folglich in die dem Ende der Auflageflächen entgegengesetzte Richtung von dem Spülenzubehörteil abfließen.

Der geneigte Endbereich der Auflageflächen kann im wesentlichen eben und unter einem im wesentlichen konstanten Winkel gegen die Horizontale geneigt sein.

Es kann aber auch vorgesehen sein, dass der geneigte Teilbereich der Auflageflächen eine - von oberhalb der Spüle aus gesehen - konkave Krümmung aufweist. Ein geneigter Teilbereich mit einer solchen konkaven Krümmung kann sich besonderes gut an einen angrenzenden horizontalen Teilbereich der Auflageflächen anschmiegen.

Bei einer bevorzugten Ausgestaltung der erfindungsgemäßen Spüle ist vorgesehen, dass die Auflageflächen außer dem geneigten Teilbereich mindestens einen nicht geneigten Teilbereich aufweisen, welcher im montierten Zustand der Spüle im wesentlichen horizontal ausgerichtet ist.

Ferner kann vorgesehen sein, dass die Auflageflächen jeweils mindestens zwei voneinander beabstandete Teilbereiche aufweisen, welche im montierten Zustand der Spüle gegen die Horizontale geneigt sind.

In diesem Fall kann insbesondere vorgesehen sein, dass die Auflageflächen ferner jeweils einen nicht geneigten Teilbereich aufweisen, welcher im montierten Zustand der Spüle im wesentlichen horizontal ausgerichtet und zwischen den geneigten Teilbereichen der Auflageflächen angeordnet ist.

Der geneigte Teilbereich der Auflageflächen weist günstigerweise einen mittleren Neigungswinkel im Bereich von ungefähr 1° bis ungefähr 10°, vorzugsweise im Bereich von ungefähr 2° bis ungefähr 5°, auf.

Um das Spülenzubehörteil sicher an der Spüle abstützen zu können, weist die Spüle mindestens zwei Auflageflächen für das Spülenzubehörteil auf, welche sich im wesentlichen parallel zueinander erstrecken und im Abstand voneinander angeordnet sind.

Anspruch 8 ist auf eine Spüle gerichtet, welche ein Spülenzubehörteil umfasst.

Dieses Spülenzubehörteil weist vorteilhafterweise eine im wesentlichen ebene Oberseite auf.

Insbesondere kann das Spülenzubehörteil als ein Schneidbrett ausgebildet sein.

Günstig ist es, wenn das Spülenzubehörteil in eine geneigte Arbeitsstellung in der Spüle bringbar ist, in welcher das Spülenzubehörteil zumindest teilweise auf einem geneigten Teilbereich der Auflageflächen aufliegt.

Insbesondere kann vorgesehen sein, dass das Spülenzubehörteil eine im wesentlichen ebene Oberseite aufweist, welche in der geneigten Arbeitsstellung gegen die Horizontale geneigt ist. Dadurch wird erreicht, dass sich bei der Benutzung des Spülenzubehörteils an dessen Oberseite ansammelnde Flüssigkeiten in der durch die Neigung der Oberseite vorgegebenen Vorzugsrichtung abfließen können.

Bei einer bevorzugten Ausgestaltung der Erfindung ist vorgesehen, dass das Spülenzubehörteil einen Rand aufweist, welcher in der geneigten Arbeitsstellung zumindest teilweise über ein Becken der Spüle hinweg verläuft.

Wenn die Oberseite des Spülenzubehörteils in der geneigten Arbeitsstellung zu dem über das Becken hinweg verlaufenden Rand des Spülenzubehörteils hin abfällt, so wird hierdurch erreicht, dass sich bei der Benutzung des Spülenzubehörteils an dessen Oberseite ansammelnde Flüssigkeiten über den genannten Rand des Spülenzubehörteils hinweg in das Becken abfließen oder abtropfen.

Wenn die Spüle einen längs ihres Randes umlaufenden erhöhten Spülenrand aufweist, so kann vorgesehen sein, dass das Spülenzubehörteil in der geneigten Arbeitsstellung den Spülenrand zumindest teilweise überdeckt.

Bei einer bevorzugten Ausgestaltung der erfindungsgemäßen Spüle ist ferner vorgesehen, dass das Spülenzubehörteil längs der Auflageflächen verschiebbar ist.

Insbesondere kann vorgesehen sein, dass das Spülenzubehörteil längs der Auflageflächen in eine geneigte Arbeitsstellung verschiebbar ist, in welcher das Spülenzubehörteil zumindest teilweise auf einem geneigten Teilbereich der Auflageflächen aufliegt.

Wenn diese geneigte Arbeitsstellung eine Verschiebe-Endstellung des Spülenzubehörteils ist, aus welcher das Spülenzubehörteil nur in eine Richtung herausverschoben werden kann, so wird hierdurch ein besonders sicherer Halt des Spülenzubehörteils in der geneigten Arbeitsstellung erzielt, was das Arbeiten an dem Spülenzubehörteil in der geneigten Arbeitsstellung des Spülenzubehörteils sicherer macht.

Bei einer bevorzugten Ausgestaltung der erfindungsgemäßen Spüle ist vorgesehen, dass das Spülenzubehörteil längs der Auflageflächen von einer ersten geneigten Arbeitsstellung, in welcher das Spülenzubehörteil zumindest teilweise auf einem geneigten Teilbereich der Auflageflächen aufliegt, in eine zweite geneigte Arbeitsstellung, in welcher das Spülenzubehörteil zumindest teilweise auf einem anderen geneigten Teilbereich der Auflageflächen aufliegt, verschiebbar ist. Auf diese Weise stehen an der Spüle zwei voneinander verschiedene geneigte Arbeitsstellungen für die Benutzung des Spülenzubehörteils zur Verfügung, was die Funktionalität der Spüle erhöht.

Insbesondere kann vorgesehen sein, dass das Spülenzubehörteil in der ersten geneigten Arbeitsstellung und in der zweiten geneigten Arbeitsstellung in einander entgegengesetzte Richtungen gegen die Horizontale geneigt ist.

Ferner kann vorgesehen sein, dass das Spülenzubehörteil längs der Auflageflächen in eine horizontale Arbeitsstellung verschiebbar ist, in welcher eine ebene Oberseite des Spülenzubehörteils im wesentlichen horizontal ausgerichtet ist.

Diese horizontale Arbeitsstellung ist besonders vielseitig nutzbar, wenn die Spüle ein erstes Becken und ein zweites Becken umfasst und das Spülenzubehörteil in der horizontalen Arbeitsstellung sowohl das erste Becken als auch das zweite Becken jeweils zumindest teilweise abdeckt. Dadurch wird erreicht, dass bei in der horizontalen Arbeitsstellung befindlichem Spülenzubehörteil von der Oberseite des Spülenzubehörteils aus sowohl in das erste Becken als auch in das zweite Becken hinein gearbeitet werden kann. Insbesondere kann in diesem Fall an dem Spülenzubehörteil anfallendes Schneidgut in eines der beiden Becken und an dem Spülenzubehörteil anfallender Abfall in das jeweils andere Becken befördert werden.

Weitere Merkmale und Vorteile der Erfindung sind Gegenstand der nachfolgenden Beschreibung und zeichnerischen Darstellung von Ausführungsbeispielen.

In den Zeichnungen zeigen:
- Fig. 1: eine perspektivische Darstellung einer Spüle mit einem vorderen Becken, einem hinteren Becken, einem rechts von dem vorderen Becken angeordneten rechten Becken und einer links von dem vorderen Becken angeordneten Abtropffläche;
- Fig. 2: eine Draufsicht von oben auf die Spüle aus Fig. 1;
- Fig. 3: einen schematischen Schnitt durch die Spüle aus den Fig. 1 und 2 längs der Linie 3-3 in Fig. 2;
- Fig. 4: eine vergrößerte Darstellung des Bereiches I aus Fig. 3;
- Fig. 5: eine perspektivische Darstellung eines Schneidbretts für die Spüle aus den Fig. 1 bis 4;
- Fig. 6: eine Draufsicht von unten auf das Schneidbrett aus Fig. 5;
- Fig. 7: eine Draufsicht von oben auf die Spüle aus den Fig. 1 bis 4 mit einem in einer vorderen Arbeitsstellung auf die Spüle aufgelegten Schneidbrett;
- Fig. 8: eine Draufsicht von oben auf die Spüle aus den Fig. 1 bis 4 mit einem auf die Spüle aufgelegten Schneidbrett in einer zentralen Arbeitsstellung;
- Fig. 9: eine Draufsicht von oben auf die Spüle aus den Fig. 1 bis 4 mit einem auf die Spüle aufgelegten Schneidbrett in einer hinteren Arbeitsstellung;
- Fig. 10: einen schematischen Schnitt durch die Spüle aus Fig. 9 mit dem auf die Spüle aufgelegten Schneidbrett längs der Linie 10-10 in Fig. 9;
- Fig. 11: eine vergrößerte Darstellung des Bereichs II aus Fig. 10;
- Fig. 12: eine Draufsicht von oben auf die Spüle aus den Fig. 1 bis 4 mit einer in das hintere Becken eingehängten Resteschale;
- Fig. 13: eine Draufsicht von oben auf die Spüle aus den Fig. 1 bis 4 mit einer in das vordere Becken eingehängten Resteschale;
- Fig. 14: eine Draufsicht von oben auf die Spüle aus den Fig. 1 bis 4 mit einer in das vordere Becken eingehängten Resteschale und einem auf die Spüle aufgelegten Schneidbrett in einer vorderen Arbeitsstellung;
- Fig. 15: einen der Fig. 10 entsprechenden schematischen Schnitt durch eine Spüle mit einem auf die Spüle aufgelegten Schneidbrett gemäß einer zweiten Ausführungsform, wobei sich das Schneidebrett in einer hinteren Arbeitsstellung befindet;
- Fig. 16: eine vergrößerte Darstellung des Bereichs III aus Fig. 15; und
- Fig. 17: einen der Fig. 15 entsprechenden schematischen Schnitt durch die Spüle mit dem darauf aufgelegten Schneidbrett gemäß einer zweiten Ausführungsform, wobei sich das Schneidbrett in einer vorderen Arbeitsstellung befindet.

Gleiche oder funktional äquivalente Elemente sind in allen Figuren mit denselben Bezugszeichen bezeichnet.

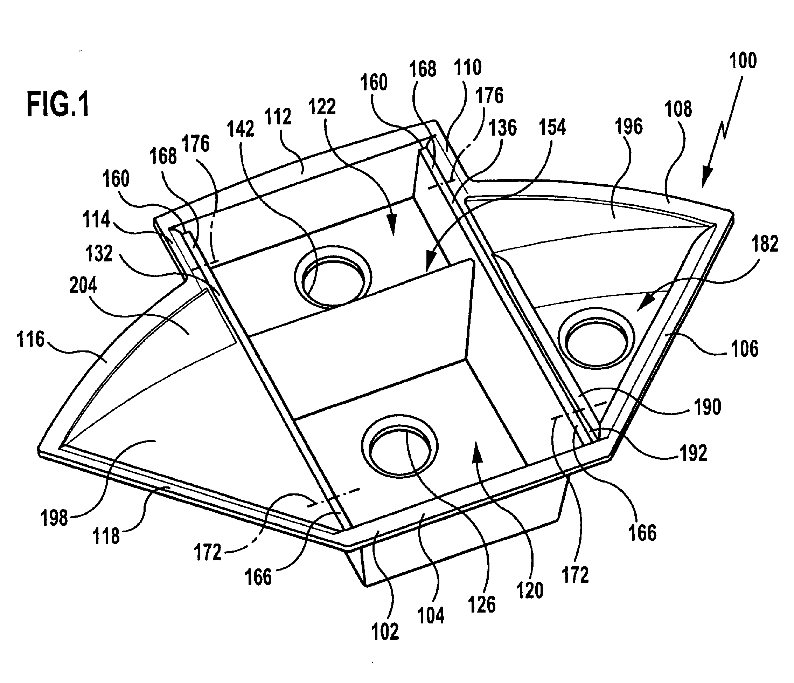

Eine in den Fig. 1 bis 4 dargestellte, als Ganzes mit 100 bezeichnete Spüle weist einen um die Spüle 100 umlaufenden, gegenüber den angrenzenden Bereichen der Spüle 100 erhöhten Spülenrand 102 auf, welcher einen dem Benutzer der Spüle zugewandten, im wesentlichen geradlinigen vorderen Spülenrand 104 umfaßt.

An das rechte Ende des vorderen Spülenrands 104 schließt sich ein vorderer rechter Spülenrand 106 an, welcher mit dem vorderen Spülenrand 104 einen stumpfen Winkel von beispielsweise ungefähr 135° einschließt.

An das hintere Ende des vorderen rechten Spülenrands 106 schließt sich ein rechter hinterer Spülenrand 108 an, welcher kreisabschnittsförmig gekrümmt ist.

An ein linkes Ende des rechten hinteren Spülenrands 108 schließt sich ein hinterer rechter Spülenrand 110 an, welcher sich senkrecht zum vorderen Spülenrand 104 nach hinten erstreckt.

An das hintere Ende des hinteren rechten Spülenrands 110 schließt sich ein zentraler hinterer Spülenrand 112 an, welcher parallel zu dem vorderen Spülenrand 104 ausgerichtet ist.

An das linke Ende des zentralen hinteren Spülenrands 112 schließt sich ein hinterer linker Spülenrand 114 an, welcher senkrecht zu dem zentralen hinteren Spülenrand 112 und senkrecht zu dem vorderen Spülenrand 104 verläuft.

An das vordere Ende des hinteren linken Spülenrands 114 schließt sich ein linker hinterer Spülenrand 116 an, welcher kreisabschnittsförmig gekrümmt ist.

An das linke Ende des linken hinteren Spülenrands 116 schließt sich ein vorderer linker Spülenrand 118 an, welcher sich nach vorne bis zu dem linken Ende des vorderen Spülenrands 104 erstreckt und mit dem vorderen Spülenrand 104 einen stumpfen Winkel von beispielsweise ungefähr 135° einschließt.

Zwischen dem vorderen Spülenrand 104 und dem zentralen hinteren Spülenrand 112 sind ein - in der Draufsicht von oben auf die Spüle 100 gesehen - im wesentlichen rechteckiges vorderes Becken 120, das an den vorderen Spülenrand 104 angrenzt, und ein - in der Draufsicht von oben auf die Spüle 100 gesehen - im wesentlichen rechteckiges hinteres Becken 122, das an den zentralen hinteren Spülenrand 112 angrenzt, angeordnet.

Das vordere Becken 120 umfaßt einen Beckenboden 124 mit einem Abfluß 126 und eine vordere Seitenwand 128, die an ihrem oberen Rand in den vorderen Spülenrand 104 übergeht.

Ferner umfaßt das vordere Becken 120 eine linke Seitenwand 130, die an ihrem oberen Rand in eine linke Auflagefläche 132 übergeht, und eine rechte Seitenwand 134, die an ihrem oberen Rand in eine rechte Auflagefläche 136 übergeht.

Zu dem hinteren Becken 122 hin ist das vordere Becken 120 durch eine hintere Seitenwand 138 begrenzt.

Das hintere Becken 122 umfaßt einen Beckenboden 140 mit einem Abfluß 142 und eine hintere Seitenwand 144, die an ihrem oberen Rand in den zentralen hinteren Spülenrand 112 übergeht.

Ferner umfaßt das hintere Becken 122 eine linke Seitenwand 146, die an ihrem oberen Rand in die linke Auflagefläche 132 übergeht, und eine rechte Seitenwand 148, die an ihrem oberen Rand in die rechte Auflagefläche 136 übergeht.

Zum vorderen Becken 120 hin ist das hintere Becken 122 durch eine vordere Seitenwand 150 begrenzt, deren oberer Rand mit dem oberen Rand der hinteren Seitenwand 138 des vorderen Beckens 120 über einen Stegbereich 152 mit einer - von oberhalb der Spüle 100 gesehen - konvex gekrümmten Oberfläche verbunden ist.

Die vordere Seitenwand 150 des hinteren Beckens 122, die hintere Seitenwand 138 des vorderen Beckens 120 und der dazwischen angeordnete Stegbereich 152 bilden zusammen eine Zwischenwand 154, welche das vordere Becken 120 und das hintere Becken 122 voneinander trennt.

Jede der beiden Auflageflächen 132, 136 dient zum Auflegen von Abstützelementen eines nachfolgend noch zu beschreibenden Schneidbretts.

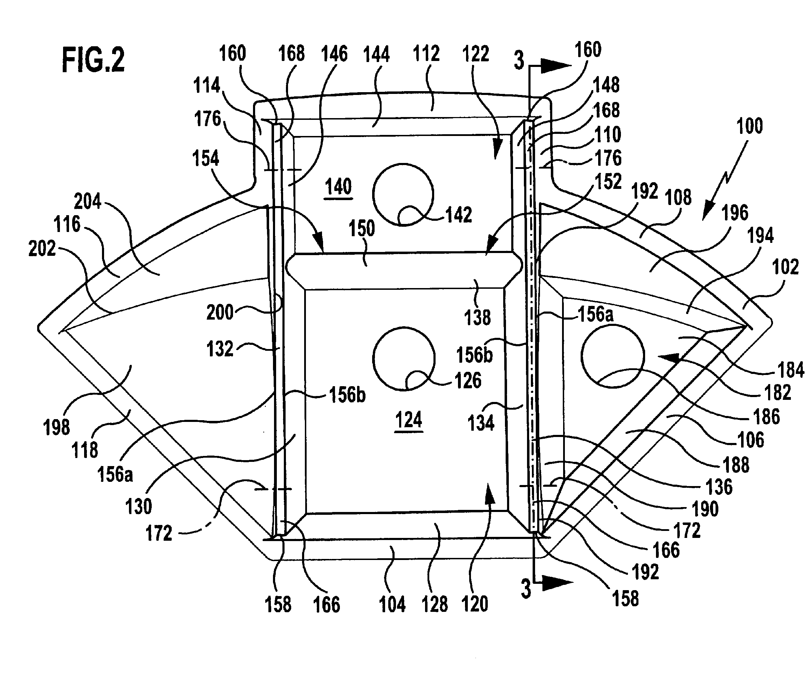

Wie am besten aus Fig. 2 zu ersehen ist, weist jede Auflagefläche 132, 136 jeweils die Form eines sich senkrecht zum vorderen Spülenrand 104 und senkrecht zum zentralen hinteren Spülenrand 112 sowie parallel zu den linken Seitenwänden 130, 146 bzw. zu den rechten Seitenwänden 134, 148 der Becken 120, 122 erstreckenden rechteckigen Streifens mit einem den Becken 120, 122 abgewandten äußeren Seitenrand 156a und einem den Becken 120, 122 zugewandten inneren Seitenrand 156b auf.

Ferner erstreckt sich jede Auflagefläche 132, 136 von einer vorderen Endkante 158 bis zu einer hinteren Endkante 160.

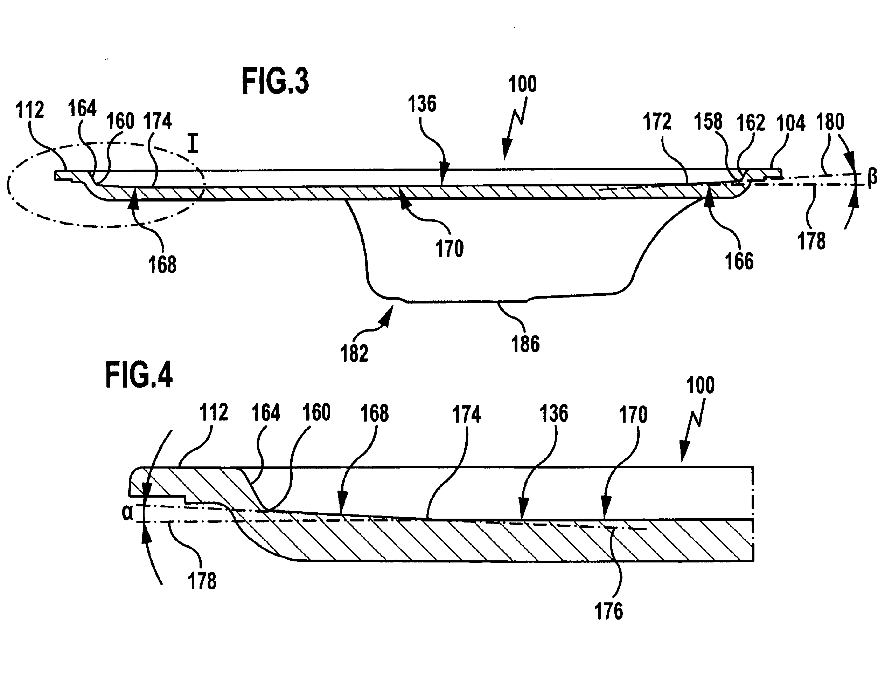

Wie am besten aus Fig. 3 zu ersehen ist, ist jede vordere Endkante 158 über eine Schräge 162 mit dem vorderen Spülenrand 104 verbunden.

In entsprechender Weise ist jede hintere Endkante 160 über eine Schräge 164 mit dem zentralen hinteren Spülenrand 112 verbunden.

Jede der Auflageflächen 132, 136 weist jeweils einen vorderen Endbereich 166, einen hinteren Endbereich 168 und einen zwischen dem vorderen Endbereich 166 und dem hinteren Endbereich 168 angeordneten Zwischenbereich 170 auf.

Der Zwischenbereich ist im wesentlichen eben und im montierten Zustand der Spüle 100 im wesentlichen horizontal ausgerichtet und erstreckt sich von einer vorderen Grenzlinie 172, die senkrecht zu den Seitenrändern 156a, 156b der Auflagefläche 132, 136 verläuft, bis zu einer hinteren Grenzlinie 174, welche ebenfalls senkrecht zu den Seitenrändern 156a, 156b verläuft.

Wie am besten aus der Schnittdarstellung der Fig. 4 zu ersehen ist, erstreckt sich der hintere Endbereich 168 jeder der Auflageflächen 132, 136 von der hinteren Grenzlinie 174 bis zu der hinteren Endkante 160, wobei der hintere Endbereich 168 der Auflagefläche von der hinteren Grenzlinie 174 aus zu der hinteren Endkante 160 hin monoton ansteigt.

Dieser Anstieg kann kontinuierlich oder diskontinuierlich erfolgen.

Der hintere Endbereich 168 kann im wesentlichen eben und unter einem im wesentlichen konstanten Winkel gegen die Horizontale geneigt sein.

Es kann aber auch vorgesehen sein, daß der hintere Endbereich 168 der Auflagefläche gekrümmt ist, und zwar vorzugsweise - von oberhalb der Spüle 100 aus gesehen - konkav gekrümmt.

Besonders günstig ist es, wenn sich der hintere Endbereich 168 im Bereich der hinteren Grenzlinie 174 im wesentlichen tangential an den horizontalen Zwischenbereich 170 anschmiegt.

Der mittlere Neigungswinkel α des hinteren Endbereichs ist bestimmt als der spitze Winkel, welchen die durch die hintere Grenzlinie 174 und die hintere Endkante 160 verlaufende Ebene 176 mit der horizontalen Ebene 178 einschließt.

Dieser mittlere Neigungswinkel α liegt vorzugsweise im Bereich von ungefähr 1° bis ungefähr 10°, insbesondere im Bereich von ungefähr 2° bis ungefähr 5°.

Bei der hinteren Grenzlinie 174 handelt es sich um eine gedachte Linie, ab welcher die Auflagefläche 132, 136 über den horizontalen Zwischenbereich 170 anzusteigen beginnt. Längs der hinteren Grenzlinie 174 kann ein sichtbarer Knick vorhanden sein; ein solcher sichtbarer Knick kann aber auch entfallen, insbesondere dann, wenn sich der hintere Endbereich 168 im wesentlichen tangential an den Zwischenbereich 170 anschmiegt.

Der vordere Endbereich 166 der Auflageflächen 132, 136 ist im wesentlichen spiegelsymmetrisch zu dem hinteren Endbereich 168 ausgestaltet.

Insbesondere erstreckt sich der vordere Endbereich 166 von der vorderen Grenzlinie 172 bis zu der vorderen Endkante 158, wobei der vordere Endbereich 166 von der vorderen Grenzlinie 172 aus zu der vorderen Endkante 158 hin monoton ansteigt.

Dieser Anstieg kann kontinuierlich oder diskontinuierlich erfolgen.

Der vordere Endbereich 166 kann im wesentlichen eben und unter einem im wesentlichen konstanten Neigungswinkel gegen die Horizontale geneigt sein.

Es ist aber auch möglich, daß der vordere Endbereich 166 gekrümmt ist, und zwar vorzugsweise - von oberhalb der Spüle 100 aus gesehen - konkav gekrümmt.

Der mittlere Neigungswinkel β des vorderen Endbereichs 166 entspricht dem spitzen Winkel, den die Ebene 180, welche durch die vordere Grenzlinie 172 und die vordere Endkante 158 verläuft, mit der horizontalen Ebene 178 einschließt.

Der Winkel β kann genauso groß gewählt wie der Winkel α und liegt vorzugsweise im Bereich von ungefähr 1° bis ungefähr 10°, insbesondere im Bereich von ungefähr 2° bis ungefähr 5°.

Wie aus Fig. 3 zu ersehen ist, sind die beiden Endbereiche 166 und 168 der Auflageflächen 132, 136 in einander entgegengesetzten Richtungen gegenüber der horizontalen Ebene 178 geneigt.

Wie am besten aus der Draufsicht der Fig. 2 zu ersehen ist, ist zwischen der rechten Auflagefläche 136 und dem vorderen rechten Spülenrand 106 der Spüle 100 ein zusätzliches rechtes Becken 182 angeordnet, welches - in der Draufsicht von oben auf die Spüle 100 gesehen - im wesentlichen dreieckig ausgebildet ist.

Das rechte Becken 182 umfaßt einen Beckenboden 184 mit einem Abfluß 186 und eine rechte Seitenwand 188, die an ihrem oberen Rand in den vorderen rechten Spülenrand 106 übergeht.

Ferner umfaßt das rechte Becken 182 eine linke Seitenwand 190, deren oberer Rand über eine Führungswand 192 mit dem äußeren Seitenrand 156a der rechten Auflagefläche 136 verbunden ist.

Die Führungswand 192 ist in ihrem unteren Abschnitt im wesentlichen vertikal und in ihrem oberen Abschnitt - von oberhalb der Spüle 100 gesehen - konvex gekrümmt ausgebildet.

Ferner umfaßt das rechte Becken 182 eine hintere Seitenwand 194, die - vom Innenraum des rechten Beckens 182 aus gesehen - leicht konkav gekrümmt ist und am oberen Rand in eine im wesentlichen horizontale Armaturen-Tragefläche 196 übergeht, welche den im wesentlichen dreieckigen Bereich zwischen dem rechten Becken 182 und dem rechten hinteren Spülenrand 108 einnimmt und an ihrem linken Rand über die Führungswand 192 zu dem äußeren Seitenrand 156a der rechten Auflagefläche 136 hin abfällt.

Die Armaturen-Tragefläche 196 kann mit einer oder mit mehreren (nicht dargestellten ) Durchgangsöffnungen versehen sein, an welchen Armaturen der Spüle 100, beispielsweise eine (nicht dargestellte) Mischbatterie oder ein (nicht dargestellter) Exzenter zum Anheben oder Absenken von Verschlüssen der Abflüsse 126, 142 oder 186 angeordnet werden können.

Zwischen der linken Auflagefläche 132 und dem vorderen linken Spülenrand 118 ist eine - in der Draufsicht von oben auf die Spüle 100 gesehen - im wesentlichen dreieckige, im wesentlichen horizontale Abtropffläche 198 angeordnet, welche über eine Führungswand 200 zu dem äußeren Seitenrand 156a der linken Auflagefläche 132 abfällt.

Die Führungswand 200 ist in ihrem unteren Abschnitt im wesentlichen vertikal und in ihrem oberen Abschnitt - von oberhalb der Spüle 100 gesehen - konvex gekrümmt ausgebildet.

An ihrem hinteren - von der Vorderseite der Spüle 100 aus gesehen - leicht konkav gekrümmten Rand geht die Abtropffläche 198 über eine Stufe 202 in eine etwas höher gelegene, im wesentlichen horizontale Armaturen-Tragefläche 204 über, welche den - in der Draufsicht von oben auf die Spüle 100 gesehen - im wesentlichen dreieckigen Bereich zwischen der Abtropffläche 198 und dem linken hinteren Spülenrand 116 einnimmt und an ihrem rechten Rand über die Führungswand 200 mit dem äußeren Seitenrand 156a der linken Auflagefläche 132 verbunden ist.

Auch die linke Armaturen-Tragefläche 204 kann mit einer oder mehreren (nicht dargestellten) Durchgangsöffnungen versehen sein, an welchen Armaturen der Spüle 100, beispielsweise eine (nicht dargestellte) Mischbatterie, ein (nicht dargestellter) Exzenter zum Anheben oder Absenken von Verschlüssen der Abflüsse oder ein (nicht dargestellter) Seifenspender angeordnet werden können.

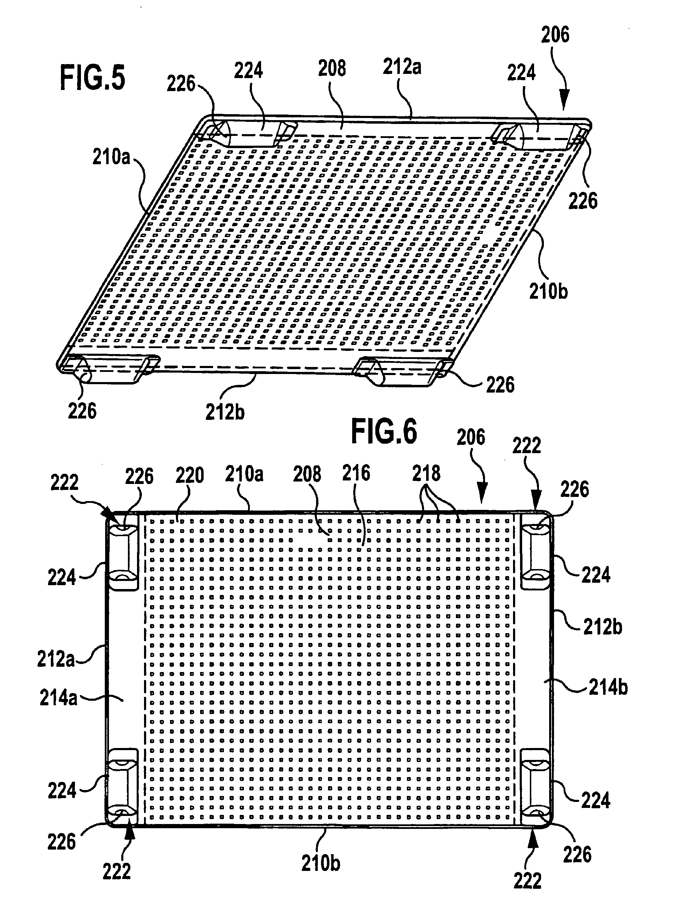

Ein in den Fig. 5 und 6 separat dargestelltes, als Ganzes mit 206 bezeichnetes Schneidbrett umfaßt eine im wesentlichen rechteckige Glasplatte 208 aus hitzebeständigem Sicherheitsglas, welche ein Paar langer Seitenränder 210a, 210b und ein Paar kurzer Seitenränder 212a, 212b aufweist.

Parallel zu jedem der kurzen Seitenränder 212a, 212b erstreckt sich jeweils ein opaker Seitenstreifen 214a, 214b. Zwischen den Seitenstreifen 214a und 214b erstreckt sich ein im wesentlichen transparentes zentrales Feld 216, welches mit einem Quadratgitter aus kleinen, opaken Quadraten 218 versehen ist.

An der Unterseite 220 des Schneidbretts 206 sind im Bereich der opaken Seitenstreifen 214a, 214b jeweils zwei Abstützelemente 222 festgelegt, welche zu den kurzen Seitenrändern 212a, 212b des Schneidbretts 206 weisende Führungsflächen 224 und zu den langen Seitenränder 210a, 210b des Schneidbretts 206 weisende Anschlagflächen 226 aufweisen.

Die Abstützelemente 222 können dabei mit der Glasplatte 208 verschraubt, verrastet oder verklebt sein.

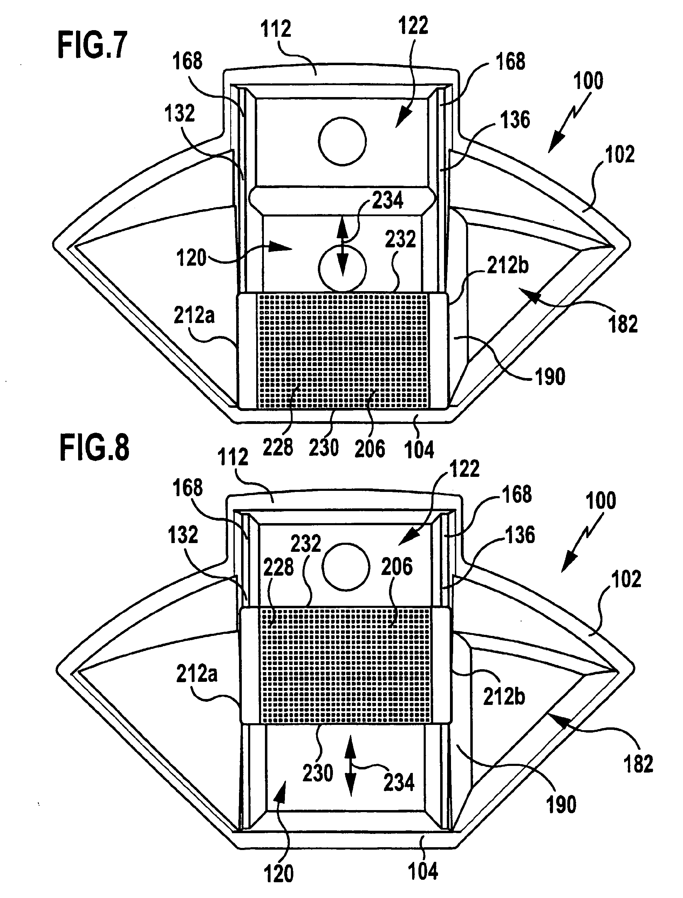

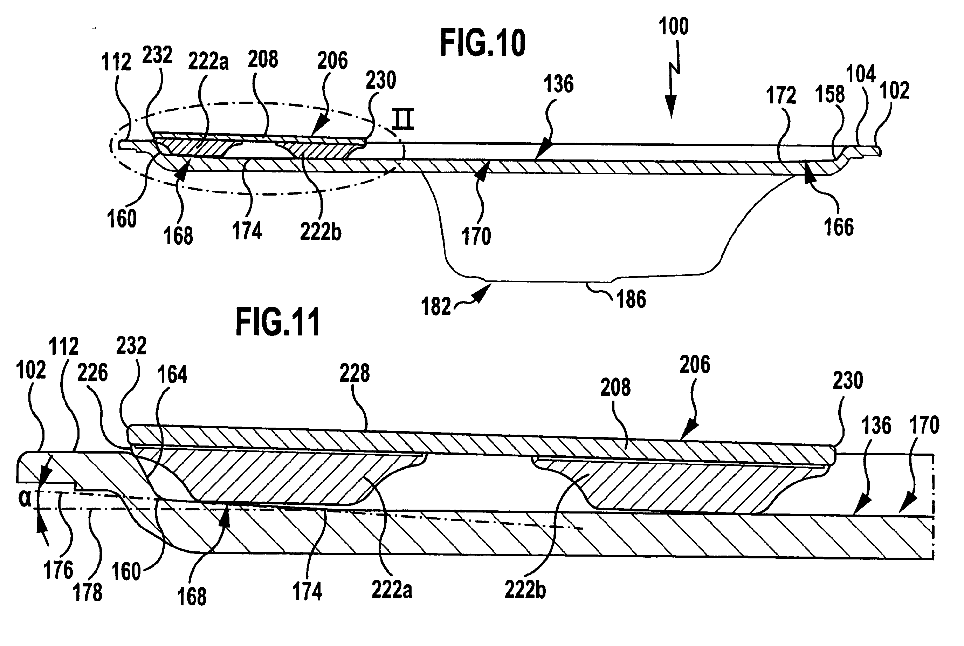

Wie aus den Fig. 7 bis 11 zu ersehen ist, kann das Schneidbrett 206 so - mit den Abstützelementen 222 voran - von oben auf die Spüle 100 aufgesetzt werden, daß sich das Schneidbrett 206 mit jeweils zwei Abstützelementen 222 auf jeder der beiden Auflageflächen 132 und 136 abstützt.

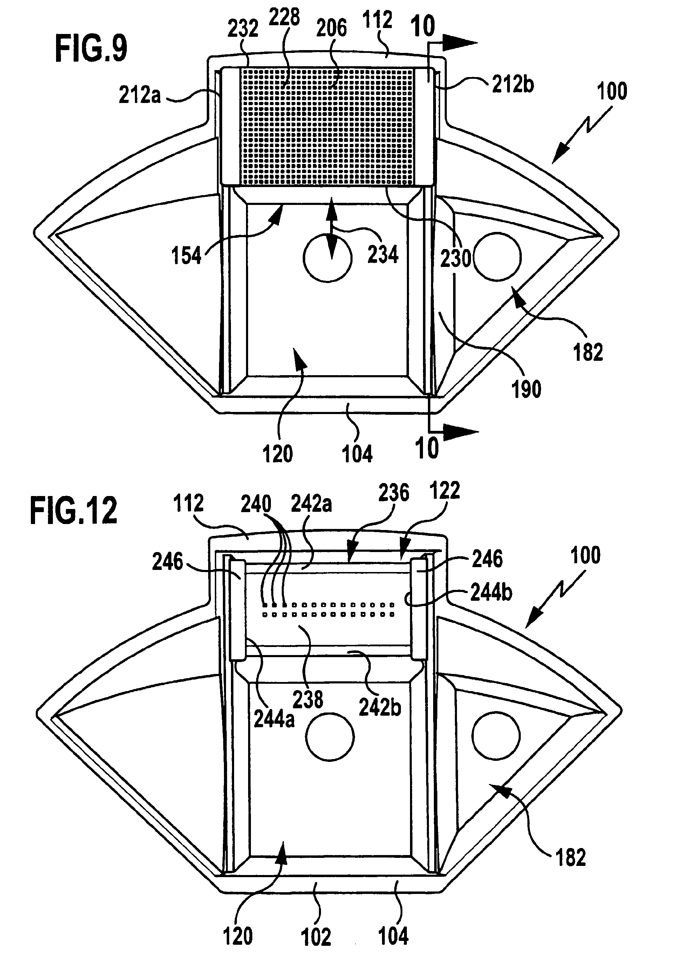

Insbesondere kann das Schneidbrett 206 in die in den Fig. 9 bis 11 dargestellte hintere Arbeitsstellung gebracht werden, in welcher die Anschlagflächen 226 der hinteren Abstützelemente 222a am oberen Rand der Schräge 164 anliegen, so daß das Schneidbrett 206 in dieser hinteren Arbeitsstellung nicht weiter nach hinten verschoben werden kann.

In dieser hinteren Arbeitsstellung liegen die hinteren Abstützelemente 222a in den hinteren Endbereichen 168 der Auflageflächen 132, 136 auf, während die vorderen Abstützelemente 222b in den horizontalen Zwischenbereichen 170 der Auflageflächen aufliegen.

Da die hinteren Endbereiche 168 der Auflageflächen gegenüber den Zwischenbereichen 170 der Auflageflächen erhöht sind, andererseits aber die vorderen Abstützelemente 222b und die hinteren Abstützelemente 222a des Schneidbretts dieselbe Höhe aufweisen und die Glasplatte 208 überall dieselbe Stärke aufweist, ist die ebene Oberseite 228 des Schneidbretts 206 in dieser hinteren Arbeitsstellung um einen Winkel gegen die horizontale Ebene 178 geneigt, welcher zwischen dem Winkel 0 und dem mittleren Neigungswinkel α der hinteren Endbereiche 168 liegt, und zwar derart, daß der vordere Rand 230 der Oberseite 228 des Schneidbretts 206 etwas tiefer liegt als der hintere Rand 232 der Oberseite 228 des Schneidbretts 206.

Durch diese Neigung der Oberseite 228 des Schneidbretts 206 ist gewährleistet, daß bei der Benutzung des Schneidbretts 206 an dessen Oberseite 228 sich ansammelnde Flüssigkeiten nicht über den hinteren Rand 232 des Schneidbretts 206 auf den Spülenrand 102 gelangen, sondern zum vorderen Rand 230 des Schneidbretts 206 hin ablaufen und über den vorderen Rand 230 auf den Stegbereich 152 und von dort in das vordere Becken 120 oder in das hintere Becken 122 abtropfen oder abfließen.

Wie aus Fig. 9 zu ersehen ist, ist die Länge der kurzen Seitenränder 212a, 212b des Schneidbretts 206 so gewählt, daß das Schneidbrett 206 in seiner hinteren Arbeitsstellung das hintere Becken 122 vollständig überdeckt, das vordere Becken 120 jedoch nicht überdeckt und somit den Zugang von oben zu dem vorderen Becken 120 nicht beeinträchtigt.

Aus dieser hinteren Arbeitsstellung ist das Schneidbrett 206 längs der Auflageflächen 132, 136 in der durch den Doppelpfeil 234 angezeigten Verschiebungsrichtung in die in Fig. 8 dargestellte zentrale Arbeitsstellung verschiebbar, in welcher sämtliche Abstützelemente 222 des Schneidbretts 206 auf den Zwischenbereichen 170 der Auflageflächen 132, 136 aufliegen, so daß die Oberseite 228 des Schneidbretts 206 in dieser zentralen Arbeitsstellung im wesentlichen horizontal ausgerichtet ist.

In dieser zentralen Arbeitsstellung überdeckt das Schneidbrett 206 sowohl das vordere Becken 120 als auch das hintere Becken 122 jeweils teilweise, so daß von der Oberseite 228 des Schneidbretts 206 aus sowohl in das vordere Becken 120 als auch in das hintere Becken 122 hinein gearbeitet werden kann.

Ferner ist in dieser zentralen Arbeitsstellung der rechte kurze Seitenrand 212b des Schneidbretts 206 über dem oberen Rand der linken Seitenwand 190 des rechten Beckens 182 angeordnet, so daß von der Oberseite 228 des Schneidbretts 206 aus auch in das rechte Becken 182 hinein gearbeitet werden kann.

Aus der zentralen Arbeitsstellung ist das Schneidbrett 206 längs der Verschiebungsrichtung 234 weiter nach vorne in die in Fig. 7 dargestellte vordere Arbeitsstellung verschiebbar, in welcher die vorderen Abstützelemente 222b mit ihren Anschlagflächen 226 an dem oberen Rand der Schräge 162 anliegen, so daß das Schneidbrett 206 aus der vorderen Arbeitsstellung nicht weiter nach vorne bewegt werden kann.

In dieser vorderen Arbeitsstellung liegen die vorderen Abstützelemente 222b in den vorderen Endbereichen 166 der Auflageflächen 132, 136 und die hinteren Abstützelemente 222a in den Zwischenbereichen 170 der Auflageflächen 132, 136 auf, so daß die ebene Oberseite 228 des Schneidbretts 206 in der vorderen Arbeitsstellung wiederum um einen Winkel gegen die horizontale Ebene 178 geneigt ist, welcher zwischen dem Winkel 0 und dem mittleren Neigungswinkel β der vorderen Endbereiche 166 liegt, und zwar derart, daß der hintere Rand 232 der Oberseite 228 des Schneidbretts 206 tiefer liegt als der vordere Rand 230 der Oberseite 228 des Schneidbretts 206.

Dadurch ist gewährleistet, daß in der vorderen Arbeitsstellung Flüssigkeiten, die sich bei der Benutzung des Schneidbretts 206 auf der Oberseite 228 desselben ansammeln, nicht über den vorderen Rand des Schneidbretts 206 auf den vorderen Spülenrand 104 gelangen, sondern vielmehr, dem Gefälle folgend, zu dem hinteren Rand 232 des Schneidbretts 206 ablaufen und über den hinteren Rand 232 des Schneidbretts 206 in das vordere Becken 120 abtropfen oder ablaufen.

Die Länge der kurzen Seitenränder 212a, 212b des Schneidbretts 206 ist so bemessen, daß der hintere Rand 232 des Schneidbretts 206 in der vorderen Arbeitsstellung etwa mittig über das vordere Becken 120 verläuft, so daß in der vorderen Arbeitsstellung von der Oberseite 228 des Schneidbretts 206 aus direkt in das vordere Becken 120 hinein gearbeitet werden kann. Insbesondere kann in dieser Arbeitsstellung in einen im vorderen Becken 120 abgestellten (nicht dargestellten) Behälter, beispielsweise einen Topf, hinein gearbeitet werden.

Da in der vorderen Arbeitsstellung der rechte kurze Seitenrand 212b des Schneidbretts 206 über der linken Seitenwand 190 des rechten Beckens 182 angeordnet ist, kann in dieser Arbeitsstellung von der Oberseite 228 des Schneidbretts 206 aus auch direkt in das rechte Becken 182 hinein gearbeitet werden.

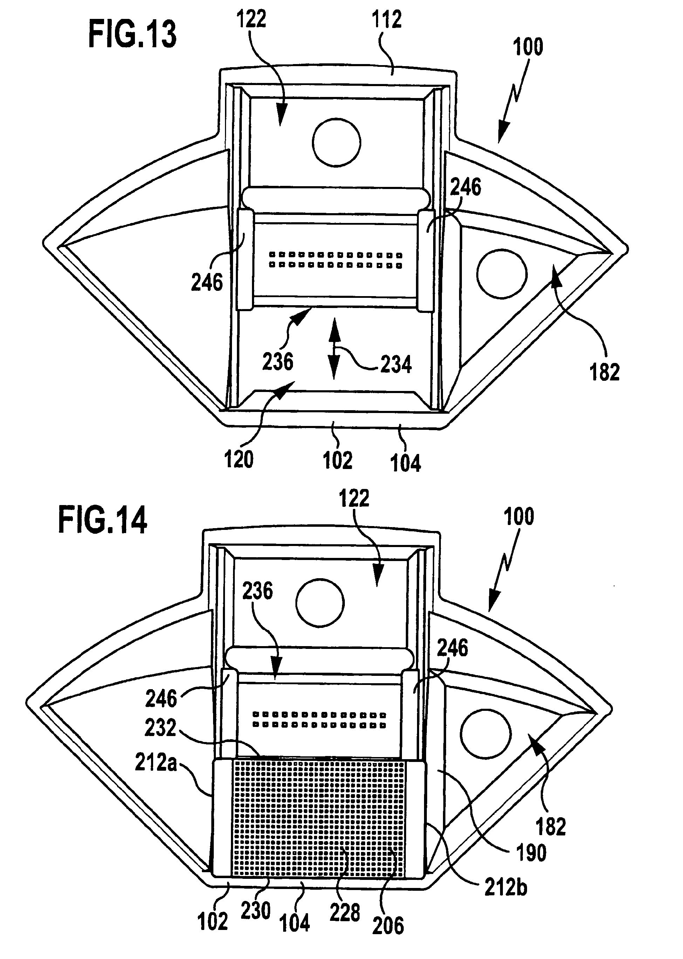

Wie in den Fig. 12 und 13 dargestellt, kann an der Spüle 100 als weiteres Spülenzubehörteil auch eine Resteschale 236 angeordnet werden.

Die Resteschale 236 umfaßt einen Boden 238 mit Abtropföffnungen 240, zwei einander gegenüberliegende lange Seitenwände 242a, 242b sowie zwei die langen Seitenwände 242a, 242b miteinander verbindende, einander gegenüberliegende kurze Seitenwände 244a, 244b, die an ihren oberen Rändern als Einhängebögen 246 ausgebildet sind.

Wie in Fig. 12 dargestellt, kann die so ausgebildete Resteschale 236 in das hintere Becken 122 eingehängt werden, wobei die Einhängebögen 246 auf den Auflageflächen 132, 136 aufliegen.

Ferner kann die Resteschale 236, wie in Fig. 13 dargestellt, auch in das vordere Becken 120 eingehängt werden, wobei ebenfalls die Einhängebögen 246 auf den Auflageflächen 132, 136 aufliegen.

Innerhalb des vorderen Beckens 120 kann die so eingehängte Resteschale 236 längs der Verschiebungsrichtung 234 verschoben werden.

Ferner ist es möglich, wie in Fig. 14 dargestellt, das Schneidbrett 206 bei in das vordere Becken 120 eingehängter Resteschale 236 oberhalb der Resteschale 236 anzuordnen, so daß beispielsweise bei in der vorderen Arbeitsstellung befindlichem Schneidbrett 206 der hintere Rand 232 des Schneidbretts 206 senkrecht über der Resteschale 236 verläuft, so daß von der Oberseite 228 des Schneidbretts 206 aus direkt in die Resteschale 236 hinein gearbeitet werden kann.

Ferner ist es bei in das vordere Becken 120 oder in das hintere Becken 122 eingehängter Resteschale 236 möglich, das Schneidbrett 206 längs der Verschiebungsrichtung 234 über die Resteschale 236 hinweg von der vorderen Arbeitsstellung in die zentrale Arbeitsstellung und weiter in die hintere Arbeitsstellung oder in umgekehrter Richtung zu verschieben.

Das auf die Auflageflächen 132, 136 der Spüle 100 aufgelegte Schneidbrett 206 wird in der vorderen Arbeitsstellung, in der hinteren Arbeitsstellung und in jeder dazwischen liegenden Stellung durch die Führungswände 192 und 200 daran gehindert, sich quer zu der Verschiebungsrichtung 234 zu verschieben.

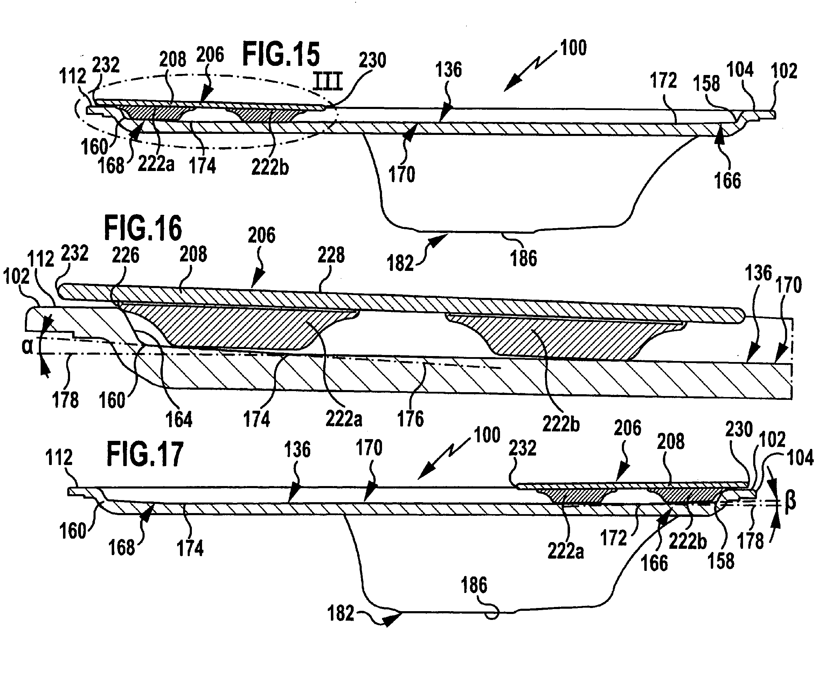

Eine in den Fig. 15 bis 17 dargestellte zweite Ausführungsform einer Kombination aus Spüle 100 und Schneidbrett 206 unterscheidet sich von der vorstehend beschriebenen Spülen-Schneidbrett-Kombination lediglich dadurch, daß die Abstützelemente 222 des Schneidbretts 206 der zweiten Ausführungsform nicht unmittelbar an den langen Seitenrändern 210a bzw. 210b der Glasplatte 208 angeordnet sind, sondern die Glasplatte 208 des Schneidbretts 206 nach vorne und nach hinten über die Abstützelemente 222 übersteht.

Durch diesen Überstand der Glasplatte 208 über die Abstützelemente 222 überdeckt die Glasplatte 208 des Schneidbretts 206 in der in den Fig. 15 und 16 dargestellten hinteren Arbeitsstellung des Schneidbretts 206 an der Spüle 100 den zentralen hinteren Spülenrand 112 zumindest teilweise, nämlich beispielsweise zu etwa zwei Dritteln.

In der in Fig. 17 dargestellten vorderen Arbeitsstellung des Schneidbretts 206 an der Spüle 100 hingegen überdeckt die Glasplatte 208 des Schneidbretts 206 den vorderen Spülenrand 104 zumindest teilweise, beispielsweise zu ungefähr zwei Dritteln.

Im übrigen stimmt die in den Fig. 15 bis 17 dargestellte Ausführungsform einer Spülen-Schneidbrett-Kombination hinsichtlich Aufbau und Funktion mit der ersten Ausführungsform überein, auf deren vorstehende Beschreibung insoweit Bezug genommen wird.

## Patentansprüche

1. Spüle, umfassend mindestens ein Becken (120, 122, 182) und mindestens eine Auflagefläche (132, 136) für ein Spülenzubehörteil (206), die mindestens einen Teilbereich (166, 168) aufweist, welcher im montierten Zustand der Spüle (100) gegen eine fläche (170,196,198) der Spüle welche im montierten zustand der spüle im wesentlichen horizontal (178) ausgerichtet ist, geneigt ist,
**dadurch gekennzeichnet,**
**dass** die Spüle (100) mindestens zwei Auflageflächen (132, 136) umfasst, die sich im wesentlichen parallel zueinander erstrecken, im Abstand voneinander angeordnet sind und mindestens einen Teilbereich (166, 168) aufweisen, welcher im montierten Zustand der Spüle (100) gegen die fläche (170,196,198) der spüle, welche im montierten zustand der spüle im wesentlichen horizontal (178) ausgerichtet ist, geneigt ist.

2. Spüle nach Anspruch 1, **dadurch gekennzeichnet, dass** der geneigte Teilbereich (166, 168) ein Endbereich der Auflageflächen (132, 136) ist und dass der Teilbereich (166, 168) derart gegen die Horizontale (178) geneigt ist, dass der Teilbereich (166, 168) zum Ende (158, 160) der Auflageflächen (132, 136) hin ansteigt.

3. Spüle nach einem der Ansprüche 1 oder 2, **dadurch gekennzeichnet, dass** der geneigte Teilbereich (166, 168) der Auflageflächen (132, 136) eine - von oberhalb der Spüle (100) aus gesehen - konkave Krümmung aufweist.

4. Spüle nach einem der Ansprüche 1 bis 3, **dadurch gekennzeichnet, dass** die Auflageflächen (132, 136) einen nicht geneigten Teilbereich (170) aufweisen, welcher im montierten Zustand der Spüle (100) im wesentlichen horizontal ausgerichtet ist.

5. Spüle nach einem der Ansprüche 1 bis 4, **dadurch gekennzeichnet, dass** die Auflageflächen (132, 136) jeweils mindestens zwei voneinander beabstandete Teilbereiche (166, 168) aufweisen, welche im montierten Zustand der Spüle (100) gegen die Horizontale (178) geneigt sind.

6. Spüle nach Anspruch 5, **dadurch gekennzeichnet, dass** die Auflageflächen (132, 136) jeweils einen nicht geneigten Teilbereich (170) aufweisen, welcher im montierten Zustand der Spüle (100) im wesentlichen horizontal ausgerichtet und zwischen den geneigten Teilbereichen (166, 168) der Auflageflächen (132, 136) angeordnet ist.

7. Spüle nach einem der Ansprüche 1 bis 6, **dadurch gekennzeichnet, dass** der geneigte Teilbereich (166, 168) einen mittleren Neigungswinkel (α, β) im Bereich von ungefähr 1° bis ungefähr 10°, vorzugsweise im Bereich von ungefähr 2° bis ungefähr 5°, aufweist.

8. Spüle nach einem der Ansprüche 1 bis 7, **dadurch gekennzeichnet, dass** die Spüle (100) ein Spülenzubehörteil (206) umfasst.

9. Spüle nach Anspruch 8, **dadurch gekennzeichnet, dass** das Spülenzubehörteil (206) eine im wesentlichen ebene Oberseite (228) aufweist.

10. Spüle nach einem der Ansprüche 8 oder 9, **dadurch gekennzeichnet, dass** das Spülenzubehörteil (206) als ein Schneidbrett ausgebildet ist.

11. Spüle nach einem der Ansprüche 8 bis 10, **dadurch gekennzeichnet, dass** das Spülenzubehörteil (206) in eine geneigte Arbeitsstellung an der Spüle (100) bringbar ist, in welcher das Spülenzubehörteil (206) zumindest teilweise auf einem geneigten Teilbereich (166, 168) der Auflageflächen (132, 136) aufliegt.

12. Spüle nach Anspruch 11, **dadurch gekennzeichnet, dass** das Spülenzubehörteil (206) eine im wesentlichen ebene Oberseite (228) aufweist, welche in der geneigten Arbeitsstellung gegen die Horizontale (178) geneigt ist.

13. Spüle nach einem der Ansprüche 11 oder 12, **dadurch gekennzeichnet, dass** das Spülenzubehörteil (206) einen Rand (232) aufweist, welcher in der geneigten Arbeitsstellung zumindest teilweise über ein Becken (120) der Spüle (100) hinweg verläuft.

14. Spüle nach Anspruch 13, **dadurch gekennzeichnet, dass** die Oberseite (228) des Spülenzubehörteils (206) in der geneigten Arbeitsstellung zu dem über das Becken (120) hinweg verlaufenden Rand (232) des Spülenzubehörteils (206) hin abfällt.

15. Spüle nach einem der Ansprüche 11 bis 14, **dadurch gekennzeichnet, dass** die Spüle (100) einen längs ihren Randes umlaufenden erhöhten Spülenrand (102) aufweist und dass das Spülenzubehörteil (206) in der geneigten Arbeitsstellung den Spülenrand (102) zumindest teilweise überdeckt.

16. Spüle nach einem der Ansprüche 8 bis 15, **dadurch gekennzeichnet, dass** das Spülenzubehörteil (206) längs der Auflageflächen (132, 136) verschiebbar ist.

17. Spüle nach Anspruch 16, **dadurch gekennzeichnet, dass** das Spülenzubehörteil (206) längs der Auflageflächen (132, 136) in eine geneigte Arbeitsstellung verschiebbar ist, in welcher das Spülenzubehörteil zumindest teilweise auf einem geneigten Teilbereich (166, 168) der Auflageflächen (132, 136) aufliegt.

18. Spüle nach Anspruch 17, **dadurch gekennzeichnet, dass** die geneigte Arbeitsstellung eine Verschiebe-Endstellung des Spülenzubehörteils (206) ist.

19. Spüle nach einem der Ansprüche 16 bis 18, **dadurch gekennzeichnet, dass** das Spülenzubehörteil (206) längs der Auflageflächen (132, 136) von einer ersten geneigten Arbeitsstellung, in welcher das Spülenzubehörteil zumindest teilweise auf einem geneigten Teilbereich (166, 168) der Auflageflächen (132, 136) aufliegt, in eine zweite geneigte Arbeitsstellung, in welcher das Spülenzubehörteil (206) zumindest teilweise auf einem anderen geneigten Teilbereich (168, 166) der Auflageflächen (132, 136) aufliegt, verschiebbar ist.

20. Spüle nach Anspruch 19, **dadurch gekennzeichnet, dass** das Spülenzubehörteil (206) in der ersten geneigten Arbeitsstellung und in der zweiten geneigten Arbeitsstellung in einander entgegengesetzten Richtungen gegen die Horizontale (178) geneigt ist.

21. Spüle nach einem der Ansprüche 16 bis 20, **dadurch gekennzeichnet, dass** das Spülenzubehörteil (206) längs der Auflageflächen (132, 136) in eine horizontale Arbeitsstellung verschiebbar ist, in welcher eine ebene Oberseite (228) des Spülenzubehörteils (206) im wesentlichen horizontal ausgerichtet ist.

22. Spüle nach Anspruch 21, **dadurch gekennzeichnet, dass** die Spüle (100) ein erstes Becken (120) und ein zweites Becken (122) umfasst und dass das Spülenzubehörteil (206) in der horizontalen Arbeitsstellung sowohl das erste Becken (120) als auch das zweite Becken (122) jeweils zumindest teilweise abdeckt.

## Claims

1. Sink unit, comprising at least one sink (120, 122, 182) and at least one support surface (132, 136) for a sink unit accessory part (206), which support surface comprises at least one sub-region (166, 168) that in the fitted state of the sink unit (100) is inclined relative to a surface (170, 196, 198) of the sink unit that in the fitted state of the sink unit is oriented substantially horizontally (178),
**characterized in**
**that** the sink unit (100) comprises at least two support surfaces (132, 136) that extend substantially parallel to one another, are disposed at a spacing from one another and have at least one sub-region (166, 168), which in the fitted state of the sink unit (100) is inclined relative to the surface (170, 196, 198) of the sink unit that in the fitted state of the sink unit is oriented substantially horizontally (178).

2. Sink unit according to claim 1, **characterized in that** the inclined sub-region (166, 168) is an end region of the support surfaces (132, 136) and that the sub-region (166, 168) is inclined in such a way relative to the horizontal (178) that the sub-region (166, 168) slopes up towards the end (158, 160) of the support surfaces (132, 136).

3. Sink unit according to one of claims 1 or 2, **characterized in that** the inclined sub-region (166, 168) of the support surfaces (132, 136) has a - viewed from above the sink unit (100) - concave curvature.

4. Sink unit according to one of claims 1 to 3, **characterized in that** the support surfaces (132, 136) have a non-inclined sub-region (170) that in the fitted state of the sink unit (100) is oriented substantially horizontally.

5. Sink unit according to one of claims 1 to 4, **characterized in that** the support surfaces (132, 136) each have at least two mutually spaced-apart subregions (166, 168) that in the fitted state of the sink unit (100) are inclined relative to the horizontal (178).

6. Sink unit according to claim 5, **characterized in that** the support surfaces (132, 136) each have a non-inclined sub-region (170) that in the fitted state of the sink unit (100) is oriented substantially horizontally and is disposed between the inclined subregions (166, 168) of the support surfaces (132, 136).

7. Sink unit according to one of claims 1 to 6, **characterized in that** the inclined sub-region (166, 168) has a mean angle of inclination (α, β) in the region of ca. 1° to ca. 10°, preferably in the region of ca. 2° to ca. 5°.

8. Sink unit according to one of claims 1 to 7, **characterized in that** the sink unit (100) comprises a sink unit accessory part (206).

9. Sink unit according to claim 8, **characterized in that** the sink unit accessory part (206) has a substantially flat upper side (228).

10. Sink unit according to one of claims 8 or 9, **characterized in that** the sink unit accessory part (206) takes the form of a chopping board.

11. Sink unit according to one of claims 8 to 10, **characterized in that** the sink unit accessory part (206) may be brought into an inclined working position on the sink unit (100), in which position the sink unit accessory part (206) is supported at least partially on an inclined sub-region (166, 168) of the support surfaces (132, 136).

12. Sink unit according to claim 11, **characterized in that** the sink unit accessory part (206) has a substantially flat upper side (228) that in the inclined working position is inclined relative to the horizontal (178).

13. Sink unit according to one of claims 11 or 12, **characterized in that** the sink unit accessory part (206) has an edge (232) that in the inclined working position extends at least partially over a sink (120) of the sink unit (100).

14. Sink unit according to claim 13, **characterized in that** the upper side (228) of the sink unit accessory part (206) in the inclined working position slopes down in the direction of the edge (232) of the sink unit accessory part (206) that extends over the sink (120).

15. Sink unit according to one of claims 11 to 14, **characterized in that** extending around the edge of the sink unit (100) is a raised sink unit edge (102) and that the sink unit accessory part (206) in the inclined working position at least partially overlaps the sink unit edge (102).

16. Sink unit according to one of claims 8 to 15, **characterized in that** the sink unit accessory part (206) is displaceable along the support surfaces (132, 136).

17. Sink unit according to claim 16, **characterized in that** the sink unit accessory part (206) is displaceable along the support surfaces (132, 136) into an inclined working position, in which the sink unit accessory part (206) is supported at least partially on an inclined sub-region (166, 168) of the support surfaces (132, 136).

18. Sink unit according to claim 17, **characterized in that** the inclined working position is a displacement limit position of the sink unit accessory part (206).

19. Sink unit according to one of claims 16 to 18, **characterized in that** the sink unit accessory part (206) is displaceable along the support surfaces (132, 136) from a first inclined working position, in which the sink unit accessory part is supported at least partially on one inclined sub-region (166, 168) of the support surfaces (132, 136), into a second inclined working position, in which the sink unit accessory part (206) is supported at least partially on another inclined sub-region (168, 166) of the support surfaces (132, 136).

20. Sink unit according to claim 19, **characterized in that** the sink unit accessory part (206) in the first inclined working position and in the second inclined working position is inclined in mutually opposite directions relative to the horizontal (178).

21. Sink unit according to one of claims 16 to 20, **characterized in that** the sink unit accessory part (206) is displaceable along the support surfaces (132, 136) into a horizontal working position, in which a flat upper side (228) of the sink unit accessory part (206) is oriented substantially horizontally.

22. Sink unit according to claim 21, **characterized in that** the sink unit (100) comprises a first sink (120) and a second sink (122) and that the sink unit accessory part (206) in the horizontal working position covers both the first sink (120) and the second sink (122) in each case at least partially.

## Revendications

1. Évier, comportant au moins une cuve (120, 122, 182) et au moins une surface de pose (132, 136) pour un accessoire d'évier (206), laquelle comporte au moins une zone partielle (166, 168) qui, à l'état monté de l'évier (100), est inclinée par rapport à une surface (170, 196, 198) de l'évier, laquelle, à l'état monté de l'évier, est orientée sensiblement à l'horizontale (178),
**caractérisé en ce que**
l'évier (100) comporte au moins deux surfaces de pose (132, 136), qui sont disposées à distance l'une de l'autre sensiblement parallèlement entre elles et qui comportent au moins une zone partielle (166, 168) qui, à l'état monté de l'évier (100), est inclinée par rapport à la surface (170, 196, 198) de l'évier, laquelle, à l'état monté de l'évier, est orientée sensiblement à l'horizontale (178).

2. Évier selon la revendication 1, **caractérisé en ce que** la zone partielle (166, 168) inclinée est une zone d'extrémité des surfaces de pose (132, 136), et **en ce que** la zone partielle (166, 168) est inclinée par rapport à l'horizontale (178) de telle sorte que la zone partielle (166, 168) est en pente ascendante vers les extrémités (158, 160) des surfaces de pose (132, 136).

3. Évier selon la revendication 1 ou 2, **caractérisé en ce que** la zone partielle (166, 168) inclinée des surfaces de pose (132, 136) possède une courbure concave - par référence à une vue du dessus de l'évier (100).

4. Évier selon l'une quelconque des revendications 1 à 3, **caractérisé en ce que** les surfaces de pose (132, 136) comportent une zone partielle (170) non inclinée qui, à l'état monté de l'évier (100), est orientée sensiblement horizontalement.

5. Évier selon l'une quelconque des revendications 1 à 4, **caractérisé en ce que** les surfaces de pose (132, 136) comportent chacune au moins deux zones partielles (166, 168) qui sont disposées à distance l'une de l'autre et qui, à l'état monté de l'évier (100), sont inclinées par rapport à l'horizontale (178).

6. Évier selon la revendication 5, **caractérisé en ce que** les surfaces de pose (132, 136) comportent chacune une zone partielle (170) non inclinée qui, à l'état monté de l'évier (100), est orientée sensiblement horizontalement et est disposée entre les deux zones partielles (166, 168) inclinées des surfaces de pose (132, 136).

7. Évier selon l'une quelconque des revendications 1 à 6, **caractérisé en ce que** la zone partielle (166, 168) est inclinée selon un angle d'inclinaison moyen (α, β) dans la plage allant de 1° environ à 10° environ, de préférence dans la plage allant de 2° environ à 5° environ.

8. Évier selon l'une quelconque des revendications 1 à 7, **caractérisé en ce que** l'évier (100) comporte un accessoire d'évier (206).

9. Évier selon la revendication 8, **caractérisé en ce que** l'accessoire d'évier (206) comporte une face supérieure (228) sensiblement plane.

10. Évier selon la revendication 8 ou 9, **caractérisé en ce que** l'accessoire d'évier (206) est réalisé sous la forme d'une planche de découpe.

11. Évier selon l'une quelconque des revendications 8 à 10, **caractérisé en ce que** l'accessoire d'évier (206) peut être amené dans une position inclinée sur l'évier (100), dans laquelle l'accessoire d'évier (206) repose au moins partiellement sur une zone partielle (166, 168) inclinée des surfaces de pose (132, 136).

12. Évier selon la revendication 11, **caractérisé en ce que** l'accessoire d'évier (206) comporte une face supérieure (228) sensiblement plane qui, dans la position de travail inclinée, est inclinée par rapport à l'horizontale (178).

13. Évier selon la revendication 11 ou 12, **caractérisé en ce que** l'accessoire d'évier (206) comporte un bord (232) qui, dans la position de travail inclinée, s'étend au moins partiellement au-delà d'une cuve (120) de l'évier (100).

14. Évier selon la revendication 13, **caractérisé en ce que** la face supérieure (228) de l'accessoire d'évier (206), dans la position de travail inclinée, s'étend en pente descendante vers le bord (232) de l'accessoire d'évier (206), le bord (232) s'étendant au-delà de la cuve (120).

15. Évier selon l'une quelconque des revendications 11 à 14, **caractérisé en ce que** l'évier (100) comporte un bord d'évier (102) surélevé sur tout son pourtour, et **en ce que** l'accessoire d'évier (206), dans la position de travail inclinée, couvre au moins partiellement le bord d'évier (102).

16. Évier selon l'une quelconque des revendications 8 à 15, **caractérisé en ce que** l'accessoire d'évier (206) peut être déplacé le long des surfaces de pose (132, 136).

17. Évier selon la revendication 16, **caractérisé en ce que** l'accessoire d'évier (206) peut être déplacé le long des surfaces de pose (132, 136) dans une position de travail inclinée, dans laquelle l'accessoire d'évier (206) repose au moins partiellement sur une zone partielle (166, 168) inclinée des surfaces de pose (132, 136).

18. Évier selon la revendication 17, **caractérisé en ce que** la position de travail inclinée est une position de fin de déplacement de l'accessoire d'évier (206).

19. Évier selon l'une quelconque des revendications 16 à 18, **caractérisé en ce que** l'accessoire d'évier (206) peut être déplacé le long des surfaces de pose (132, 136) depuis une première position de travail inclinée, dans laquelle l'accessoire d'évier (206) repose au moins partiellement sur une zone partielle (166, 168) inclinée des surfaces de pose (132, 136), vers une deuxième position de travail inclinée, dans laquelle l'accessoire d'évier (206) repose au moins partiellement sur une autre zone partielle (168, 166) inclinée des surfaces de pose (132, 136).

20. Évier selon la revendication 19, **caractérisé en ce que** l'accessoire d'évier (206), dans la première position de travail inclinée et dans la deuxième position de travail inclinée, est incliné dans des sens opposés par rapport à l'horizontale (178).

21. Évier selon l'une quelconque des revendications 16 à 20, **caractérisé en ce que** l'accessoire d'évier (206) peut être déplacé le long des surfaces de pose (132, 136) dans une position de travail horizontale, dans laquelle une face supérieure (228) plane de l'accessoire d'évier (206) est orientée sensiblement horizontalement.

22. Évier selon la revendication 21, **caractérisé en ce que** l'évier (100) comporte une première cuve (120) et une deuxième cuve (122) et **en ce que** l'accessoire d'évier (206), dans la position de travail horizontale, couvre au moins partiellement tant la première cuve (120) que la deuxième cuve (122).
